# EUROPÄISCHE PATENTSCHRIFT

(11) **EP 1 524 216 B1**
(45) Veröffentlichungstag und Bekanntmachung des Hinweises auf die Patenterteilung: **02.08.2006**
(21) Anmeldenummer: 04090395.7
(22) Anmeldetag: 12.10.2004
(51) Int. Cl.: B65G 61/00

(54) **Greifvorrichtung zur Aufnahme von Stückgut und Verfahren dazu**
Gripping device for picking up articles and method thereof
Dispositif de préhension pour saisir des objets et procédé à cet effet

(30) Priorität: 13.10.2003 DE 10349021
(43) Veröffentlichungstag der Anmeldung: 20.04.2005
(73) Patentinhaber: Deutsche Post AG, 53175 Bonn (DE)
(72) Erfinder: Franck, Hermann, 27721 Ritterhude (DE); Echelmeyer, Wolfgang, 27711 Osterholz-Scharmbeck (DE); Wellbrock, Eckhard, 27616 Lunestedt (DE)
(74) Vertreter: Neumann, Günter

(56) Entgegenhaltungen:
- EP-A- 0 076 182
- EP-A- 0 581 188
- US-A- 5 040 942

## Beschreibung

Die Erfindung betrifft eine Greifvorrichtung zur Aufnahme von insbesondere quaderförmigem Stückgut aus einem Container, von einem LKW-Aufbau oder einer dergleichen Ladefläche sowie zur Ablage des Stückgutes und ein Verfahren dazu.

Die Erfindung ist besonders geeignet, Transport- und Handhabungsprozesse, wie sie beispielsweise im Paketverkehr oder bei anderen logistischen Gütern anzutreffen sind, zu rationalisieren.

Selbständig arbeitende Roboter mit Greifvorrichtungen zum Entstapeln und Stapeln von Stückgut sind bereits allgemein bekannt Aus der US-A-5040942 ist eine solche Vorrichtung zum Entlaben von Stückgut aus Paletten bekannt. So beschreibt die DE 44 27 488 A1 ein Verfahren und einen Stückgutgreifer, insbesondere für Roboter zum Palettieren von Stückgutteilen, insbesondere Paketen. Das aufzunehmende und zum Transport beziehungsweise Palettieren vorgesehene Stückgut wird mittels Sauggreifer an seiner freien Stirnseite erfasst und auf eine horizontale Stützfläche gezogen, um es in dieser Transportstellung an den jeweiligen Palettierungsort verbringen und dort mit Hilfe des Sauggreifers zur Bildung eines Palettenstapels wieder ablegen zu können.

Die DE 42 06 038 C2 offenbart ein Verfahren und eine Vorrichtung zum Auflösen und Bilden von Stückgutstapeln, bei denen die obere Stückgutablage durch Greifer, insbesondere Sauggreifer, erfasst und angehoben wird, so dass ihr Boden geringfügig oberhalb einer einfahrbaren Abstützebene liegt, auf der das Stückgut durch seitlich angreifende Klemmleisten geklemmt und in dieser Position zur Ablagestelle transportiert wird.

Aus der DE 41 28 809 A1 ist eine Vorrichtung zum Entladen von Paletten und zum Stapeln von Stückgut auf Paletten zu entnehmen, bei der die zu logistischen Zwecken aufzunehmenden Stückgüter der oberen Lage einzeln mit Hilfe von Sauggreifern erfasst und danach angehoben werden und in dem sich zwischen den oberen Stückgütern und der verbleibenden Stückgutlage ergebenden keilförmigen Spalt ein Verschiebeblech unterstützend eingefahren wird. Die dann darauf befindlichen Stückgüter werden so weitertransportiert.

Die DE 39 14 596 A1 beschreibt ein Verfahren und eine Fördereinrichtung zum Abnehmen von Gegenständen von einer Unterlage, bei denen an der freien Seite des abzunehmenden Gegenstandes ein Kipporgan, beispielsweise ein Sauggreifer, angreift, den Gegenstand ankippt und auf eine unterhalb des Kipporgans positionierte oder positionierbare Tragfläche für den Weitertransport zieht.

Aus der EP 0 629 573 B1 ist des weiteren eine Aufnahme- und Fördereinrichtung bekannt, die mit rechtwinklig angeordneten Sauggreifern zur Aufnahme von Stapeln von Zuschnitten ausgestattet ist, wobei der Sauggreifer, der die Zuschnitte stirnseitig positionieren soll, Teil einer schwenkbar angeordneten Stütze ist, auf der die zu handhabenden Zuschnitte zum Zwecke des Transportes temporär abgesetzt werden.

Aus US 5,984,623 geht eine an einem Roboter anordenbare Greifvorrichtung hervor, die horizontal und gegeneinander gerichtete Sauggreifer aufweist, von denen ein Sauggreifer horizontal verfahrbar ist und als ein Greifflächenelement funktioniert.

Die Lösungen nach dem Stand der Technik sind insbesondere für Stückgüter mit nahezu gleichen Abmaßen sowie für Stückgüter geeignet, die entweder vom Stapel allseitig zugänglich sind oder definiert im Raum im rechten Winkel zur Schwerkraftrichtung gelagert sind.

Probleme werfen die bekannten technischen Lösungen jedoch dann auf, wenn die Größen, insbesondere von quaderförmigen Stückgütern, variieren und das Stückgut im Raum eine beliebige und ungeordnete Dichtlage aufweist oder Stückgut aus einem Stapel entnommen werden soll.

Der Erfindung liegt daher die Aufgabe zugrunde, eine an einem Roboter anordenbare Greifvorrichtung bereitzustellen, mit der insbesondere quaderförmiges Stückgut unterschiedlicher Größe und Dichtlage und unabhängig von seiner Lage in oder auf einem Stapel zuverlässig aus einem Container, von einem LKW-Aufbau oder einer dergleichen Ladefläche aufgenommen und transportiert werden kann.

Der Erfindung liegt des weiteren die Aufgabe zugrunde, ein Verfahren zum Aufnehmen von insbesondere quaderförmigem Stückgut aus einem Container, von einem LKW-Aufbau oder einer dergleichen Ladefläche sowie zur Ablage des Stückgutes unter Verwendung der erfindungsgemäßen Greifvorrichtung bereitzustellen.

Erfindungsgemäß wird die Aufgabe durch eine Greifvorrichtung mit den Merkmalen des Anspruches 1 und durch ein Verfahren mit den Merkmalen des Anspruches 12 gelöst. Vorteilhafte Ausgestaltungen der erfindungsgemäßen Greifvorrichtung ergeben sich aus den Merkmalen der Ansprüche 2 bis 11 und des erfindungsgemäßen Verfahrens aus den Merkmalen der Ansprüche 13 bis 16.

Mit der Erfindung verbindet sich gegenüber dem bekannten Stand der Technik der besondere Vorzug einer nunmehr möglichen flexiblen Aufnahme, insbesondere von quaderförmigen Stückgütern. Diese Flexibilität bezieht sich vor allem auf die unterschiedlichen Abmessungen der von einer Ladefläche aufzunehmenden Stückgüter hinsichtlich deren Breite, Höhe und Tiefe, deren Gewichtes sowie darauf, dass dieses Stückgut auch aus der Mitte eines Stapels von übereinander gelagertem Stückgut aufgenommen werden kann.

Mit der vorgeschlagenen Erfindung kann das bisher meist manuelle und monotone mit zum Teil schwerer körperlicher Belastung verbundene Entladen logistischer Stückgüter im Rahmen von Transport- und Handhabungsprozessen problemlos automatisiert werden.

Mit bevorzugten Ausführungsformen der Erfindung, bei denen die Greifvorrichtung um 180° drehbar am Roboter angeordnet ist oder durch den Roboterarm um 180° drehbar ist, verbindet sich der besondere Vorzug, dass die Vorrichtung effektiv für das deckenhohe Entladen von Stückgut aus einem einseitig offenen Laderaum geeignet ist.

Gemäß einer weiteren bevorzugten Ausführungsform der Erfindung kann Stückgut aufgenommen werden, das sich in einem völlig ungeordneten Zustand befindet und somit den Ordnungszustand 0/0 aufweist.

Im nachfolgenden soll die Erfindung an Hand von Zeichnungen eines Ausführungsbeispiels der Greifvorrichtung näher erläutert werden. Es zeigen:
- **Fig. 1**: die Seitenansicht der Greifvorrichtung
- **Fig. 2**: die Unteransicht der Greifvorrichtung gemäß Fig. 1
- **Fig. 3**: die Draufsicht auf die Greifvorrichtung gemäß Fig. 1
- **Fig. 4**: die Seitenansicht der Greifvorrichtung gemäß Fig. 1

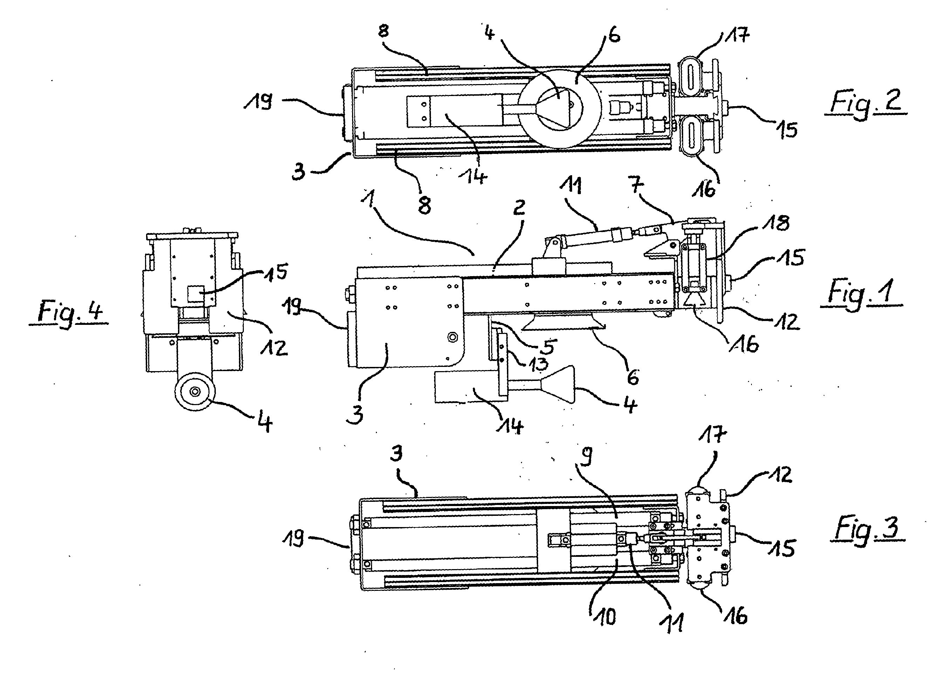

Die Greifvorrichtung 1 weist eine an dem Befestigungsflansch 3 angeordnete Teleskopeinrichtung 8 auf, die gemäß **Fig. 1** mit den zwei Linearantrieben 9 und 10 in Gestalt von Linearzylindern, die ebenfalls am Befestigungsflansch angeordnet sind, ausfahrbar ist. Wie aus den **Fig. 1 bis 4** erkennbar ist, befindet sich die Teleskopeinrichtung 8 bei diesem Ausführungsbeispiel in der eingefahrenen Position. Auf der ausfahrbaren Teleskopeinrichtung 8 ist ein weiterer Linearantrieb 11, hier ebenfalls ein Linearzylinder, angelenkt, der mit der Teleskopeinrichtung 8 verfahren wird. Durch Längenänderung des Linearzylinders 11 wird das auf einem drehbar angelenkten Kniehebel 7 geführte Greifflächenelement 12 in einer vertikal translatorischen Führung, hier in einer nicht sichtbaren Schwalbenschwanzführung, von einer oberen in eine untere Endlage positioniert. **Fig. 1** zeigt das Greifflächenelement 12 in seiner oberen Position. Die Linearzylinder 9,10 und 11 werden hier pneumatisch betrieben. Es können jedoch auch hydraulische Linearantriebe eingesetzt werden.

Mindestens ein vertikal gerichteter Sauggreifer 4 ist an einem kolbenstangenlosen pneumatischen oder hydraulischen Linearantrieb 2, der am Befestigungsflansch 3 verschraubt ist, horizontal verschiebbar angeordnet. An einem hier nicht sichtbaren Schlitten des Linearantriebs 2 ist an einer vertikal verlaufenden Stütze 5 in einer Schwalbenschwanzführung 13 ein horizontal gerichteter Sauggreifer 6 mit Vakuumheber 14 angeordnet, die ebenfalls horizontal verfahrbar sind und eine vertikale mechanische Nachgiebigkeit von ca. 20 mm aufweisen. Der Sauggreifer 4 und der Sauggreifer 6 sind mit dem gleichen Schlitten zusammen oder gemäß einer anderen Ausführung getrennt verfahrbar und mit Hilfe einer Steuerung positionierbar. Um auch Stückgüter zu erfassen, deren Vorderseite nicht senkrecht zum Sauggreifer 4 zeigt, können an der Stütze 5 auch zwei Sauggreifer, die um bis zu 10° zu beiden Seiten drehbar gelagert sind, nebeneinander angebracht sein.

An dem über den drehbar angelenkten auf dem Kniehebel 7 geführten Greifflächenelement 12 ist der Sensor 15 zum Detektieren der vorderen und hinteren sichtbaren Kante des aufzunehmenden Stückgutes angeordnet. Der Sensor 15 kann aber auch am Ende der Teleskopeinrichtung 8 angebracht sein. Die Möglichkeit, die Teleskopeinrichtung 8 mit den Linearzylindern 9 und 10 horizontal bewegen zu können, geben der Greifvorrichtung 1 hinsichtlich der Tiefe des zu entnehmenden Stückgutes eine besonders hohe Flexibilität.

Gemäß einer bevorzugten Ausführungsform der Erfindung ist zur zusätzlichen Lagestabilisierung von aufzunehmendem Stückgut gemäß den **Fig. 1 bis 3** am Greifflächenelement 12 oder gegebenenfalls am Ende der Teleskopeinrichtung 8 wenigstens ein weiterer vertikal gerichteter Sauggreifer 16; 17 angeordnet, der gleichzeitig mit dem Greifflächenelement 12 oder auch getrennt von diesem verfahrbar ist. Mindestens eine vertikal gerichtete hier nicht sichtbare Druckfeder und eine horizontal wirkende Pendelstütze 18 geben dem Sauggreifer 16 eine mechanische Nachgiebigkeit. Als Sauggreifer 4, 6, 16 und 17 können Vakuumsauggreifer bekannter Art eingesetzt werden.

Die Greifvorrichtung 1 ist zum Zwecke des deckenhohen Entladens von Stückgut mit einem Flansch 19 um 180° drehbar an dem Roboter angeordnet oder durch den Roboterarm um 180° drehbar. Zum Zweck des deckenhohen Entladens kann der Sauggreifer 4 mit Unterstützung des Vakuumhebers 14 so weit vorgefahren werden, dass er die Vorderkante des Greifsystems 1 bildet und dieses dadurch um seine Längsachse flexibel eingesetzt werden kann.

Gemäß einer bevorzugten Ausführungsform der Erfindung mit der hier nicht dargestellten Sensoreinheit, bestehend aus Scanner und/oder CCD-Kamera, wird aus der Gesamtzahl der aus dem einseitig offenen Laderaum aufzunehmenden Stückgüter das jeweils als nächstes zu entnehmende Stückgut in seinem Orientierungszustand im Raum ermittelt. Dazu werden dessen obere Kante in den X-Y-Z-Koordinaten und in ihrem Winkel zum Basiskoordinatensystem des Roboters sowie des Punktes für das horizontale Ansetzen des Sauggreifers 4 auf der vorderen Seitenfläche des Stückgutes bestimmt und die entsprechenden Signale an die Steuerung des in den X-Y-Z-Achsen beweglichen Roboters und die Linearantriebe 2, 9, 10 und 11 gegeben. Die am Roboter drehbar gelagerte Greifvorrichtung 1 wird daraufhin mit Hilfe der Werkzeuge des Roboters an das zu entnehmende Stückgut gefahren und der Sauggeifer 4 an den zuvor bestimmten Ansatzpunkt auf der vorderen Seitenfläche des Stückgutes gedrückt, mit Hilfe der Steuerung die Saugwirkung aktiviert und das Stückgut angesaugt. Das Stückgut wird danach mit dem Sauggreifer 4 und gegebenenfalls mit Unterstützung durch den Sauggreifer 6 soweit herausgezogen, bis der an dem Greifflächenelement 12 angeordnete Sensor 15 die hintere obere Kante des Stückgutes detektieren kann. Der Sensor 15 gibt nach der Detektion dieser Kante das Steuersignal für das Positionieren des bis dahin in seiner oberen Lage mit Hilfe des Kniehebels 7 fixierten Greifflächenelementes 12 hinter dem aufzunehmenden Stückgut. Das Greifflächenelement 12 wird bis zu einer Tiefe von 50 mm bis 80 mm an der hinteren Seitenfläche des Stückgutes positioniert. Sofern Stückgut aufgenommen werden soll, dessen hintere obere Kante durch den Sensor 15 auf Grund der besonderen Länge des Stückgutes nicht erfasst werden kann und die nutzbare Wegstrecke des Sauggreifers 4 dazu nicht ausreicht, wird zusätzlich mit Hilfe der Linearzylinder 9 und 10 die Teleskopeinrichtung 8 ausgefahren.

Soweit es sich um Stückgut mit einer rutschsicheren oberen Seitenfläche handelt, sieht eine bevorzugte Ausführungsform des erfindungsgemäßen Verfahrens zur Minderung des Haftungs- und Reibungswiderstandes auf der unter dem aufzunehmenden Stückgut befindlichen Fläche vor, dass das Stückgut mit dem an dessen vorderen Seitenfläche positionierten Sauggreifers 4 zunächst in einem geringen Winkel bis zu ca. 5° angehoben und erst danach herausgezogen wird.

Eine weitere bevorzugte Ausführungsform sieht vor, dass an der unteren Kante des Greifflächenelementes 12 Rollen montiert sind, die insbesondere bei einer geringen Höhe des Stückgutes beim Herausziehen ein Abrollen auf einem möglicherweise darunter befindlichen Stückgut erlauben, ohne dieses zu zerstören.

Mit dem Positionieren des Greifflächenelementes 12 hinter dem aufzunehmenden Stückgut wird durch den Sensor 15 die Bewegungsrichtung der Linearzylinder 9 und 10 so gesteuert, dass das Stückgut zwischen dem Greifflächenelement 12 und dem Sauggreifer 4 geklemmt ist. Zweckmäßigerweise wird durch den Sensor 15 auch das Aufsetzen des vertikal gerichteten Sauggreifers 6 auf die obere Seitenfläche des Stückgutes und das Einsetzen der Saugwirkung des Sauggreifers 6 ausgelöst. Das so durch das Greifflächenelement 12 und die Sauggreifer 4 und 6 fixierte Stückgut kann anschließend an einen definierten Ort transportiert und dort nach Entlastung der Sauggreifer 4 und 6 sowie durch Ausfahren der Linearzylinder 9 und 10 beziehungsweise Zurückfahren des Sauggreifers 4 abgelegt werden.

Wie aus dem Ausführungsbeispiel gemäß **Fig. 1** ersichtlich ist, sind am Greifflächenelement 12 zur zusätzlichen Lagestabilisierung des Stückgutes zwei weitere vertikal gerichtete Sauggreifer 16 und 17 angeordnet. Gemäß einer besonderen Ausführungsform der Erfindung können die Sauggreifer 16 und 17 auch am Ende der Teleskopeinrichtung 8 angelenkt sein. Sie können selbständig oder zusammen mit dem Greifflächenelement 12 vertikal verfahren und durch den Sensor 15 gesteuert werden. Die Sauggreifer 16 und 17 sind mit einer mechanischen Nachgiebigkeit montiert, die vertikal durch hier nicht sichtbare Druckfedern und horizontal durch die Pendelstütze 18 realisiert wird.

### BEZUGSZEICHENAUFSTELLUNG

- 1: Greifvorrichtung
- 2: Linearantrieb
- 3: Befestigungsflansch
- 4: Sauggreifer
- 5: Stütze
- 6: Sauggreifer
- 7: Kniehebel
- 8: Teleskopeinrichtung
- 9: Linearantrieb
- 10: Linearantrieb
- 11: Linearantrieb
- 12: Greifflächenelement
- 13: Schwalbenschwanzführung
- 14: Vakuumheber
- 15: Sensor
- 16: Sauggreifer
- 17: Sauggreifer
- 18: Pendelstütze
- 19: Flansch

## Patentansprüche

1. Greifvorrichtung zur Aufnahme von Stückgut mit wenigstens einem horizontal gerichteten, mit einem Antrieb (2) verfahrbaren Sauggreifer (4) und einem Greifflächenelement (12) wobei der Antrieb (2) ein Linearantrieb ist, **dadurch gekennzeichnet, dass**
- die Greifvorrichtung (1) eine Teleskopeinrichtung (8) aufweist, die mit wenigstens einem an einem Befestigungsflansch (3) angeordneten Linearantrieb (9; 10) horizontal verschiebbar ist;
- das Greifflächenelement (12) am Ende der Teleskopeinrichtung (8) angeordnet ist und in Bezug auf ihre horizontale Längsachse in vertikaler Richtung bewegbar ist;
- das Greifflächenelement (12) über einen drehbar angelenkten Kniehebel (7) mit Hilfe des auf der Teleskopeinrichtung (8) angelenkten und horizontal verfahrbaren Linearantriebes (11) positionierbar ist und
- ein vertikal gerichteter Sauggreifer (6) an dem Linearantrieb (2) angeordnet und mit diesem verfahrbar ist.

2. Greifvorrichtung nach Anspruch 1, **dadurch gekennzeichnet, dass** an dem Greifflächenelement (12) oder an der Vorderkante der Teleskopeinrichtung (8) ein Sensor (15) angeordnet ist, der die Bewegungsrichtung des Linearantriebes (11) zur vertikalen Positionierung des Greifflächenelementes (12) und die Bewegungsrichtung und die Funktion der Sauggreifers (4; 6) und die der Teleskopeinrichtung (8) steuert.

3. Greifvorrichtung nach Anspruch 2, **dadurch gekennzeichnet, dass** der Sensor (15) Ventile zum Koppeln und Entkoppeln der Sauggreifer (4; 6; 16; 17) steuert, um deren Saugleistung durch Verringerung von Vakuumverlusten zu erhöhen.

4. Greifvorrichtung nach einem der Ansprüche 1 bis 3, **dadurch gekennzeichnet, dass** am Greifflächenelement (12) oder am Ende der Teleskopeinrichtung (8) wenigstens ein weiterer in vertikaler Richtung angeordneter und selbständig oder zusammen mit dem Greifflächenelement (12) positionierbarer Sauggreifer (16; 17) zur zusätzlichen Lagestabilisierung des Stückgutes angeordnet ist, der vorzugsweise mit Hilfe mindestens einer Druckfeder eine vertikale und/oder mit einer Pendelstütze (18) eine horizontale mechanische Nachgiebigkeit aufweist.

5. Greifvorrichtung nach einem der Ansprüche 1 bis 4, **dadurch gekennzeichnet, dass** die Greifvorrichtung (1) in ihrer Längsrichtung um 180° drehbar an einem Roboter angeordnet ist oder durch den Roboter um 180° drehbar ist.

6. Greifvorrichtung nach einem der Ansprüche 1 bis 5, **dadurch gekennzeichnet, dass** die Greifvorrichtung (1) eine Kraftbegrenzung aufweist, um insbesondere Zerstörung und Beschädigung von weniger festem Stückgut, wie Paketkarton, zu vermeiden.

7. Greifvorrichtung nach einem der Ansprüche 1 bis 6, **dadurch gekennzeichnet, dass** der horizontal gerichtete Sauggreifer (4) mit einem Vakuumheber (14) an einer Stütze (5) angeordnet ist und eine vertikale mechanische Nachgiebigkeit von ca. 20 mm aufweist.

8. Greifvorrichtung nach einem der Ansprüche 1 bis 7, **dadurch gekennzeichnet, dass** an der unteren Kante des Greifflächenelementes (12) Rollen montiert sind, um insbesondere eine Zerstörung und Beschädigung von weniger festem Stückgut, wie Paketkarton, zu vermeiden.

9. Greifvorrichtung nach einem der Ansprüche 1 bis 8, **dadurch gekennzeichnet, dass** der Linearantrieb (2) ein kolbenstangenloser Linearantrieb ist und/oder wie die Linearantriebe (9; 10; 11) hydraulisch oder pneumatisch betreibbar ist.

10. Greifvorrichtung nach einem der Ansprüche 1 bis 9, **dadurch gekennzeichnet, dass** der Sauggreifer (4) mittels einer mit der Steuerung für den Roboter und die Linearantriebe (2; 9; 10; 11) verbundenen Sensoreinheit, bestehend aus einem Scanner und/oder einer CCD-Kamera, durch Bestimmung einer Lageposition des jeweils aufzunehmenden Stückgutes und eines Ansatzpunktes auf der vorderen Seitenfläche des aufzunehmenden Stückgutes positionierbar ist.

11. Greifvorrichtung nach Anspruch 10, **dadurch gekennzeichnet, dass** die Lageposition durch die obere Kante der vorderen Seitenfläche des Stückgutes in den X-Y-Z-Koordinaten und in ihrem Winkel zum Basiskoordinatensystem des Roboters bestimmt ist.

12. Verfahren zum Aufnehmen und Ablegen von quaderförmigem Stückgut aus einem Container, einem LKW-Aufbau oder einem dergleichen, einseitig offenen Laderaum, wobei eine Seitenfläche des Stückgutes zumindest annähernd einer Entladeöffnung zugewandt ist und mit Hilfe einer an einem Roboter angeordneten Greifvorrichtung nach den Ansprüchen 1 bis 11, bei dem ein in horizontaler Richtung angeordneter Sauggreifer (4) mit Hilfe eines Antriebes an eine vordere Seitenfläche des aufzunehmenden Stückgutes gefahren wird, dieses ansaugt, entsprechend weit herauszieht, anschließend ein Greifflächenelement (12) hinter dem herausgezogenen Stückgut positioniert wird und dieses festklemmt und in seiner Lage fixiert und das Stückgut anschließend angehoben und an einem definierten Ort durch Entlasten der Sauggreifer (4; 6) abgelegt wird, **dadurch gekennzeichnet, dass**
- die Lageposition des aufzunehmenden Stückgutes sowie der Punkt für das horizontale Ansetzen des Sauggreifers (4) auf der vorderen Seitenfläche des Stückgutes mittels einer Sensoreinheit, bestehend aus einem Scanner und/oder einer CCD-Kamera, bestimmt werden;
- das Stückgut mit dem in horizontaler Richtung angeordneten Sauggreifer (4) oder zusammen mit dem in vertikaler Richtung angeordneten Sauggreifer (6) zunächst an seiner vorderen Seite geringfügig angehoben bevor es herausgezogen wird und
- das Herausziehen des Stückgutes für die Wegstrecke bis zum Positionieren des Greifflächenelementes (12) hinter dem Stückgut und der Zeitpunkt des Positionierens des Greifflächenelementes (12) durch einen die obere hintere Kante des aufzunehmenden Stückgutes detektierenden Sensors (15) gesteuert werden.

13. Verfahren nach Anspruch 12, **dadurch gekennzeichnet, dass** für die Lageposition die obere Kante der vorderen Seitenfläche des Stückgutes in den X-Y-Z-Koordinaten und in ihrem Winkel zum Basiskoordinatensystem des Roboters bestimmt wird.

14. Verfahren nach Anspruch 12 oder 13, **dadurch gekennzeichnet, dass** das Greifflächenelement (12) um ausreichend Anschlagfläche zu erreichen, 50 mm bis 80 mm unter der oberen hinteren Kante des Stückgutes positioniert wird.

15. Verfahren nach einem der Ansprüche 12 bis 14 **dadurch gekennzeichnet, dass** das aufzunehmende Stückgut durch wenigstens einen weiteren am Greifflächenelement (12) oder am Ende der Teleskopeinrichtung (8) in vertikaler Richtung angeordneten und selbständig oder zusammen mit dem Greifflächenelement (12) verfahrbaren Sauggreifer (16; 17) in seiner Lage stabilisiert wird.

16. Verfahren nach einem der Ansprüche 12 bis 14, **dadurch gekennzeichnet, dass** zum Festklemmen größeren Stückgutes die Teleskopeinrichtung (8) in Richtung der hinteren Kante des Stückgutes mit Hilfe der Linearantriebe (9; 10) ausgefahren wird, bis der Sensor (15) die hintere obere Kante des aufzunehmenden Stückgutes detektiert hat und das Greifflächenelement (12) hinter dem Stückgut mit Hilfe des Linearantriebes (11) positioniert werden kann.

## Claims

1. Grabbing device for picking up goods with at least one suction pickup (4) with a horizontal drive (29) and a surface grabbing element (12), whereby the drive (2) is a linear drive **characterized by**
- the grabbing device (1) has telescoping equipment (8) which is attached to the linear drive (9;10) with at least attachment flange (3) and can be moved horizontally;
- the surface grabbing element (12) is attached to the end of the telescoping device (8) and can be moved in a vertical direction along its horizontal longitudinal axis;
- the surface grabbing element (12) can be positioned with a toggle joint (7) with the help of the horizontal linear drive (11) attached to the telescoping device (8) and
- a vertical suction pickup (6) attached to the linear drive (2) that can be driven by this.

2. Grabbing device in accordance with claim 1, **characterized by** a sensor (15) attached to the surface grabbing element (12) or the front of the telescoping device (8), which controls the direction of movement of the linear drive (11) for the vertical positioning of the surface grabbing element (12) ant the direction and function of the suction pick-up (4; 6) and the telescoping device (8).

3. Grabbing device in accordance with claim 2, **characterized by** the sensor (15) the valves for the coupling and decoupling of the suction pickup (4; 6; 16; 17), so as to increase the vacuum power by reducing the loss of vacuum.

4. Grabbing device in accordance with one of the claims 1 to 3, **characterized by** at least one other vertically placed and independent or together with the surface grabbing element (12) or on the end of the telescoping device (8) or together with the surface grabbing element (12) positional suction pickup (16; 17) for the additional stabilization of the goods. Preferably with the help of at least one pressure spring a vertical and/or, with a rocking pendulum (18), horizontal mechanical resilience.

5. Grabbing device in accordance with one of the claims 1 to 4, **characterized by** the grabbing device (1) being 180° pivotal lengthwise on a robot or it is 180° pivotal by means of the robot.

6. Grabbing device in accordance with one of the claims 1 to 5, **characterized by** the grabbing device (1) having a force limiter so as to avoid destruction or damage of goods which are less solid, for instance, packaging cardboard.

7. Grabbing device in accordance with one of the claims 1 to 6, **characterized by** the horizontal suction pickup (4) having a vacuum siphon (14) attached to a stanchion (5) and a mechanical resilience of ca. 20 mm.

8. Grabbing device in accordance with one of the claims 1 to 7, **characterized by** rollers being mounted on the bottom edge of the surface grabbing element (12), to avoid destruction or damage of goods which are less solid, for instance, packaging cardboard.

9. Grabbing device in accordance with one of the claims 1 to 8, **characterized by** the linear drive (2) being a linear drive without a piston rod and/or like the linear drives (9; 10; 11) that can be operated either hydraulically or pneumatically.

10. Grabbing device in accordance with one of the claims 1 to 9, **characterized by** the suction pickup (4) being positional by means of a link with the control for the robot and the linear drives (2; 9; 10; 11) by means of a sensor unit consisting of a scanner and/or a CCD camera and a storage position of the good and the starting point on the front side of the good.

11. Grabbing device in accordance with claim 10, **characterized by** the storage position being determined by the upper edge of the front side of the good in the X-Y-Z coordinates and their angle to the basic coordinate system of the robot.

12. Process for picking up and placing rectangular goods from a container, a truck bed or a similar loading space open on one side, whereby one side of the good must be a t least nearly facing an unloading opening and with the aid of a grabbing device on a robot in accordance with claims 1 to 11, on which a suction pickup (4) is driven in the horizontal direction with the help of a drive to the front side of the good to be pickup, this is sucked up, pulled out; then a surface grabbing element (12) is placed behind the good and this is clamped tight and attached in its position and the good is then lifted and then placed in a defined position with the release of the suction pickup (4; 6), **characterized by**
- the storage position of the pickup good and the point of the horizontal placement of the suction pickup (4) on the front of the good is determined by a sensor unit consisting of a scanner and/or a CCD camera;
- good is lifted slightly on the front side in the horizontal direction before it is pulled out by suction pickup (4) or together with the suction pickup (6) arranged in the vertical position
- the pulling out of the good for the distance to the positioning of the surface grabbing element (12) behind the good and the time of the positioning of the surface grabbing element (12) is controlled by a detecting sensor (15) the upper back edge of the good to be picked up.

13. Process in accordance with claim 12, **characterized by** for the storage position the upper edge of the front side of the good in the X-Y-Z coordinates und their angle to the basic coordinate system of the robot.

14. Process in accordance with claim 12 or 13, **characterized by** the surface grabbing element (12) is positioned 50 mm to 80 mm below the top back edge of the good to attain sufficient grabbing space.

15. Process in accordance with claims 12 to 14 **characterized by** the good to be picked up is stabilized in its position by at least one other vertically placed and independent or together with the surface grabbing element (12) or on the end of the telescoping device (8) or together with the surface grabbing element (12) positional suction pickup (16; 17).

16. Process in accordance with claims 1 to 14, **characterized by** the telescoping device (8) can, for clamping larger goods in place, be extended in the direction of the back edge of the good with the help of the linear drive (9; 10), till the sensor (15) has detected the back upper edge of the good to be picked up and the surface grabbing element (12) can be positioned behind the good with the help of the linear drive (11).

## Revendications

1. Dispositif de préhension destiné à saisir des marchandises de détail muni d'au moins une ventouse (4) orientée horizontalement et pouvant se déplacer à l'aide d'un dispositif d'entraînement (2) et d'un élément à surface de préhension (12), le dispositif d'entraînement (2) étant un dispositif d'entraînement linéaire, **caractérisé en ce que**
- le dispositif de préhension (1) présente un dispositif télescopique (8) qui peut se déplacer horizontalement à l'aide d'au moins un dispositif d'entraînement linéaire (9;10) disposé sur une bride de fixation (3);
- l'élément à surface de préhension (12) est disposé à l'extrémité du dispositif télescopique (8) et peut se déplacer dans le sens vertical par rapport à son axe longitudinal horizontal;
- l'élément à surface de préhension (12) peut être positionné à l'aide du dispositif d'entraînement linéaire (11) pouvant se déplacer horizontalement et s'articulant sur le dispositif télescopique (8) par l'intermédiaire d'un levier à genouillère (7) s'articulant comme une charnière et
- une ventouse (6) orientée verticalement est disposée sur le dispositif d'entraînement linéaire (2) et peut se déplacer avec celui-ci.

2. Dispositif de préhension selon la revendication 1, **caractérisé en ce qu'**un capteur (15) qui commande le sens de déplacement du dispositif d'entraînement linéaire (11) pour positionner verticalement l'élément à surface de préhension (12) et le sens de déplacement et le fonctionnement de la ventouse (4;6) et celui du dispositif télescopique (8) est disposé sur l'élément à surface de préhension (12) ou sur le bord avant du dispositif télescopique (8).

3. Dispositif de préhension selon la revendication 2, **caractérisé en ce que** le capteur (15) commande des soupapes destinées à embrayer et désembrayer les ventouses (4;6;16;17) afin d'augmenter leur puissance d'aspiration en réduisant des pertes de vide.

4. Dispositif de préhension selon l'une quelconque des revendications 1 à 3, **caractérisé en ce que**, pour bien maintenir en place la marchandise de détail, au moins une ventouse supplémentaire (16;17) disposée dans le sens vertical et pouvant être positionnée de façon autonome ou conjointement avec l'élément à surface de préhension (12) est disposée sur l'élément à surface de préhension (12) ou à l'extrémité du dispositif télescopique (8), ventouse présentant de préférence à l'aide d'au moins un ressort de compression une élasticité mécanique verticale et/ou horizontale à l'aide d'un support oscillant (18).

5. Dispositif de préhension selon l'une quelconque des revendications 1 à 4, **caractérisé en ce que** le dispositif de préhension (1) est disposé sur un robot de façon à pouvoir effectuer une rotation de 180° dans son sens longitudinal ou il peut être tourné de 180° par le robot.

6. Dispositif de préhension selon l'une quelconque des revendications 1 à 5, **caractérisé en ce que** le dispositif de préhension (1) présente un dispositif de limitation de force afin d'éviter notamment toute destruction et tout endommagement des marchandises de détail moins rigides, comme le carton pour colis.

7. Dispositif de préhension selon l'une quelconque des revendications 1 à 6, **caractérisé en ce que** la ventouse (4) orientée horizontalement est disposée, avec un dispositif de levage à vide (14), sur un support (5) et présente une élasticité mécanique verticale d'env. 20 mm.

8. Dispositif de préhension selon l'une quelconque des revendications 1 à 7, **caractérisé en ce que** des rouleaux sont montés sur le bord inférieur de l'élément à surface de préhension (12) afin d'éviter notamment toute destruction et tout endommagement des marchandises de détail moins rigides, comme le carton pour colis.

9. Dispositif de préhension selon l'une quelconque des revendications 1 à 8, **caractérisé en ce que** le dispositif d'entraînement linéaire (2) est un dispositif d'entraînement linéaire sans tige de piston et/ou les dispositifs d'entraînement linéaire (9;10;11) peuvent être actionnés par un système hydraulique ou pneumatique.

10. Dispositif de préhension selon l'une quelconque des revendications 1 à 9, **caractérisé en ce que** la ventouse (4) peut être positionnée au moyen d'une unité sensorielle reliée à la commande du robot et des dispositifs d'entraînement linéaire (2;9;10;11), se composant d'un scanner et/ou d'une caméra CCD, en déterminant un positionnement de la marchandise de détail à saisir à chaque fois et un point de placement sur la face latérale avant de la marchandise de détail à saisir.

11. Dispositif de préhension selon la revendication 10, **caractérisé en ce que** le positionnement est déterminé par le bord supérieur de la face latérale avant de la marchandise de détail dans les coordonnées X, Y, Z et leur angle par rapport au système de coordonnées de base du robot.

12. Procédé destiné à saisir et déposer des marchandises de détail de forme parallélépipédique d'un conteneur, d'un support de chargement PL ou d'un compartiment de charge semblable, ouvert d'un côté, une face latérale de la marchandise de détail étant tournée au moins à proximité d'un orifice de déchargement et étant aspirée et extirpée sur une distance adéquate à l'aide d'un dispositif de préhension disposé sur un robot conformément aux revendications 1 à 11 pour lequel une ventouse (4) disposée dans le sens horizontal se déplace sur une face latérale avant de la marchandise de détail à saisir à l'aide d'un dispositif d'entraînement, un élément à surface de préhension (12) étant positionné derrière la marchandise de détail extirpée en la bloquant et la maintenant en place, la marchandise de détail étant finalement soulevée et déposée à un endroit défini grâce au relâchement de la ventouse (4;6), **caractérisé en ce que**
- le positionnement de la marchandise de détail à saisir ainsi que le point destiné au placement horizontal de la ventouse (4) sur la face latérale avant de la marchandise de détail sont déterminés au moyen d'une unité sensorielle, se composant d'un scanner et/ou d'une caméra CCD ;
- avant d'être extirpée, la marchandise de détail est d'abord soulevée faiblement sur sa face avant à l'aide de la ventouse (4) disposée dans le sens horizontal ou conjointement avec la ventouse (6) disposée dans le sens vertical et
- l'extirpation de la marchandise de détail effectuée pour le trajet allant jusqu'au positionnement de l'élément à surface de préhension (12) derrière la marchandise de détail et le moment de positionnement de l'élément à surface de préhension (12) sont commandés par un capteur (15) détectant le bord arrière supérieur de la marchandise de détail à saisir.

13. Procédé selon la revendication 12, **caractérisé en ce que**, pour le positionnement, le bord supérieur de la face latérale avant de la marchandise de détail est déterminé dans les coordonnées X, Y, Z et leur angle par rapport au système de coordonnées de base du robot.

14. Procédé selon la revendication 12 ou 13, **caractérisé en ce que** l'élément à surface de préhension (12) est positionné entre 50 mm et 80 mm sous le bord arrière supérieur de la marchandise de détail afin d'obtenir une surface de prise suffisante.

15. Procédé selon l'une quelconque des revendications 12 à 14, **caractérisé en ce que** la position de la marchandise de détail à saisir est stabilisée par au moins une ventouse supplémentaire (16;17) disposée dans le sens vertical sur l'élément à surface de préhension (12) ou à l'extrémité du dispositif télescopique (8) et pouvant se déplacer de façon autonome ou conjointement avec l'élément à surface de préhension (12).

16. Procédé selon l'une quelconque des revendications 1 à 14, **caractérisé en ce que**, pour bloquer les marchandises de détail de taille importante, le dispositif télescopique (8) sort en direction du bord arrière de la marchandise de détail à l'aide des dispositifs d'entraînement linéaire (9;10), jusqu'à ce que le capteur (15) ait détecté le bord arrière supérieur de la marchandise de détail à saisir et que l'élément à surface de préhension (12) puisse être positionné derrière la marchandise de détail à l'aide du dispositif d'entraînement linéaire (11).
